# EUROPEAN PATENT SPECIFICATION

(11) **EP 2 758 719 B1**
(45) Date of publication and mention of the grant of the patent: **05.04.2017**
(21) Application number: 12769152.5
(22) Date of filing: 13.09.2012
(51) Int. Cl.: F24C 15/20, F24F 11/00

(54) **A method of operating a system for extracting air**
Verfahren zum Betreiben eines Dunstabzugssystems
Méthode de fonctionnement d'un sytème d'extraction d'air

(30) Priority: 13.09.2011 GB 201115816; 19.01.2012 GB 201200886
(43) Date of publication of application: 30.07.2014
(73) Proprietor: Sirius Products Limited, Welwyn Garden City Hertfordshire AL7 1JQ (GB)
(72) Inventor: VERNER, Neil, Welwyn Garden City, Hertfordshire AL7 1JQ (GB)
(74) Representative: Spencer, Michael David
(86) International application number: PCT/GB2012/052271
(87) International publication number: WO 2013/038194

(56) References cited:
- EP-A1- 2 261 569
- WO-A1-00/66950
- WO-A1-2010/065793
- GB-B- 2 450 732
- US-A1- 2005 224 069
- US-A1- 2011 028 079
- US-B1- 6 170 480
- US-B1- 6 920 874

## Description

The present invention relates to a method of operating a system for extracting air from a vicinity, especially for removing exhaust air and air-borne products from the cooking process in commercial kitchens.

It is well-known that the food cooking process often releases quantities of air-borne fatty and odorous particles as well as heat and smoke. In addition, the combustion of cooking fuel and chemical reactions in the cooking process produce carbon dioxide. It is an aim of a first aspect of the present invention to extract such particles, smoke, heated air and carbon dioxide from the cooking environment. It is a further aim of a first aspect of the present invention to extract the particles and carbon dioxide from the cooking environment in an energy-efficient and non-disruptive manner.
It is also well-known that some of the air-borne waste products from the cooking process are highly inflammable, especially hot particles of fatty material.
Accordingly the present invention is directed to a method of operating a system for extracting air as described in Claim 1. Advantageously further features are described in Claims 2 to 11. A system for extracting air from a vicinity may comprise a filter chamber, a means for determining the level of cooking activity, a signal processing means and a pumping means, wherein the means for determining the level of cooking activity feeds information to the signal processing means in order to control the pumping means. The pumping means is controlled so that the intensity of pumping is adjusted to meet the requirements of the situation. For example, when only a small amount of cooking is taking place not so much heat, smoke or carbon dioxide is produced and therefore the pump does not need to operate at a high intensity. Conversely where the cooking process is generating a higher air pressure and a higher than normal level of heat, smoke or carbon dioxide, more air needs to be extracted from the vicinity.

The advantage of this feed back system is that energy is conserved and the noise generated by the system will be minimised for any particular cooking situation.

Extraction systems traditionally work in one of two ways. Constant pressure and variable air volumes systems work by utilising dampers to section areas within a kitchen that require extraction. The system can be more flexible making the fan run at a lower intensity for longer. However, as the fan always has to maintain pressure, the absorbed power is still relatively high for the lower extraction speed.

Variable pressure and variable volume systems have no dampers. Therefore they can run at a lower absorbed power for the same air flow. The main draw back with these systems is that if the system is operating in one area of the kitchen the system is on full power for all areas of the kitchen.

In cook mode, a system of the present invention operates at constant pressure and variable volume. This affords the greatest energy and noise reductions by damping-off non-cooking areas. This consequently ensures that the fan runs at a lower absorbed power during the operational cooking hours. During the periods when no cooking is detected, the dampers open and the fan is allowed to run at a lower pressure. This means that the fans do not have to maintain pressure when there is no cooking activity, resulting in a reduction in energy use. As soon as any cooking process is detected, the system automatically reverts to the highly-versatile, constant-pressure, variable air volume system.

The filter chamber may be an eddy current filter.

Eddy current filters can remove over 50% of fatty particles of 5µm or more in diameter from the incident exhaust air. This is more efficient than previously-known baffle filters.

The filter chamber may be an ultra-violet light filter.

The filter chamber may be a combination of an eddy current filter and an ultra-violet light filter.

The filter chamber may be constructed of a fire-resistant material such as austenitic stainless steel.

The filter chamber may be constructed of a fire-resistant material such as steel of at least 1mm thickness.

The filter chamber may comprise buttress supports. These may add rigidity to the chamber to mitigate heat-induced deformation.

The means for determining the level of cooking activity may be a heat detector or a smoke detector or a carbon dioxide concentration measuring means, or two or more of these working in combination.

The heat detector may be a platinum resistance temperature measuring device.

The means for determining the level of cooking activity may further comprise an air pressure sensor.

The smoke detector may comprise a light scattering monitor.

The pumping means may comprise a Belimo® motor and a damper.

The intensity of the pumping means may be varied in order to vary the pressure between the damper and the pumping means.

An air pressure measuring means may be placed between the damper and the pumping means in order to correctly control the intensity of the pumping means.

The system for extracting air according to the present invention may further comprise a corresponding air supply mechanism.

The air extraction system and air supply mechanism may be linked in order to balance the air extracted and the air supplied so as to maintain a desired pressure within the vicinity.

In a cooking environment it may be preferred to maintain the air pressure lower than atmospheric pressure so that smells which result from the cooking process do not spread outside the kitchen environment.

The air pressure within the kitchen may be around 70 per cent of atmospheric pressure.

It is known to extract exhaust air and air-borne products using a fan which can operate at substantially a low extraction level and a high extraction level. When one or more sensors detect a level of cooking above a certain threshold level the fan is switched to a high extraction level. When the sensor or sensors detect a level of cooking below that threshold the fan is switched to a low extraction level. GB2450732B (Food Industry Technical), for example, discloses an air control system for removing heat, smoke and steam from above a cooking appliance, the system comprising an air extraction assembly comprising an extract hood defining an air inlet of the air extraction assembly, an extract fan arranged to draw air into and through the extract hood for exhausting air from a location above the cooking appliance to an external location, and at least two sensors located in the air extraction assembly for detecting at least two variable parameters of the air drawn through the extract hood, the at least two sensors comprising a temperature sensor for detecting temperature as a first variable parameter and a flow meter for detecting the flow rate of the extracted air, the flow rate comprising a second variable parameter, an air supplying assembly for supplying air in a food processing area which contains the cooking appliance, the air supplying assembly comprising an air supply fan, and a control device for controlling the speed of the extract fan, the control device having a preset speed module which is adapted to define a first preset relationship between the detected temperature and the speed of the extract fan, and an override module which is adapted to increase the speed of the extract fan to a preset maximum value when at least one of the variable parameters reaches a preset threshold.

The arrangement described above is more energy efficient than earlier systems which comprised a fan which was either on when the kitchen was operating or off when it was not. However the arrangement described above remains fairly simplistic and prone to either excessive energy consumption if the threshold is set too low or incomplete exhaust extraction if the threshold is set too high.

It is therefore an aim of the present invention to more closely match the rate of extraction of exhaust air from a cooking environment with the rate of production of the exhaust air.

A system for extracting air from a cooking environment comprising a filter chamber, a means for determining a level of cooking activity, a signal processing means and a pumping means, wherein the means for determining the level of cooking activity feeds information to the signal processing means in order to control the pumping means such that the pumping means maintains a first level of air extraction when the level of cooking activity is below a first threshold, a second level of air extraction when the level of cooking activity is between the first threshold and a second threshold and the air extraction varies continuously with the level of cooking activity above the second threshold.

The advantage of this arrangement is that the energy required to maintain high levels of extraction is only consumed when required by a high level of cooking. This has clear energy efficiency advantages over previously known arrangements.

Under circumstances when no cooking is taking place the system will usually operate at the first level of air extraction, in order to prevent the natural build-up of gases such as carbon dioxide. When cooking appliances are switched on but only relatively low cooking activity is taking place the system will usually operate at the second level of air extraction. When substantive cooking activity is taking place the system will usually be in the mode where the level of air extraction varies continuously with cooking activity as described above.

The means for determining the level of cooking activity may be a heat detector or a smoke detector or a carbon dioxide concentration measuring means, or two or more of these working in combination.

The heat detector may be a platinum resistance temperature measuring device.

The means for determining the level of cooking activity may further comprise an air pressure sensor.

The elements of the means for determining the level of cooking activity may be located in close proximity to the cooking activity or further away within the kitchen.

The relative importance of the or each factor may vary according to the specific requirements of a particular installation.

There may be more than one of each type of level of cooking activity determining means, located at different points.

The smoke detector may comprise a light scattering monitor.

The pumping means may comprise a Belimo® motor and a damper.

The intensity of the pumping may be varied in order to vary the pressure between the damper and the pumping means.

An air pressure measuring means may be placed between the damper and the pumping means in order to correctly control the intensity of the pumping.

The system for extracting air according to a second aspect of the present invention may further comprise a corresponding air supply mechanism.

The air extraction system and air supply mechanism may be linked in order to balance the air extracted and the air supplied so as to maintain a desired pressure within the vicinity.

In a cooking environment it may be preferred to maintain the air pressure lower than atmospheric pressure so that smells which result from the cooking process do not spread outside the kitchen environment.

The air pressure within the kitchen may be around 70 per cent of atmospheric pressure.

An air extraction system made in accordance with the present invention will now be described hereinbelow with reference to and as shown in the enclosed drawing, in which Figure 1 shows a schematic diagram of the first aspect of the system, Figure 2 shows a schematic diagram of the second aspect of the system and Figure 3 shows how the level of air extraction of the system of the second aspect varies with the level of cooking activity.

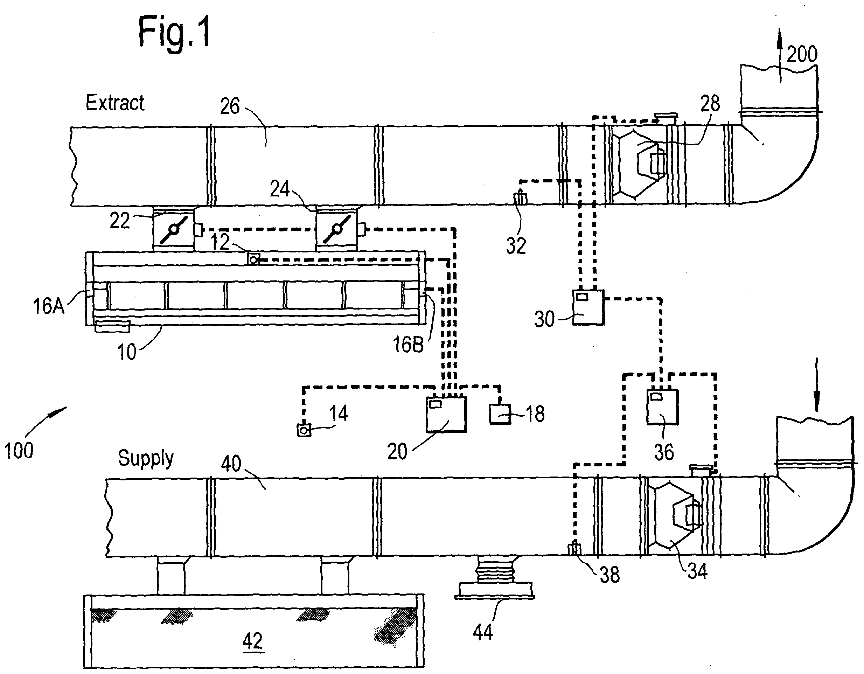

In Figure 1 a canopy 10 containing a plurality of eddy current filter units provides a filter chamber. Thermostats 12 and 14 measure the ambient temperature of the air inside the extraction system and in the cooking area 100, respectively. The canopy 10 also comprises a light scattering monitor 16A, 16B. A carbon dioxide sensor 18 measures the concentration of carbon dioxide in the cooking area 100. The data from thermostats 12 and 14, light scattering monitor 16 and carbon dioxide monitor 18 are fed to an inverter 20 which acts as a signal processing means. The inverter 20 further connects to two Belimo® motor and damper combinations 22, 24.

The inverter 20 uses the data it is provided with to control the intensity of extraction by adjusting the Belimo® motor and damper combinations 22, 24.

The Belimo® motor and damper combinations 22, 24 control the throughput of air from the cooking area 100 to the extraction tube 26. Air is moved through the extraction tube 26 to the outside 200 by an extraction fan 28. The extraction fan 28 is controlled by an inverter 30 which in turn receives data from the pressure transducer 32 within the extraction tube 26.

The air extraction of Figure 1 also comprises a corresponding air supply system. This supply system comprises a supply fan 34 controlled by inverter 36 which receives data from inverter 30 and pressure transducer 38 inside supply tube 40. A canopy 42 and a ceiling grille 44 enable air from inside the supply tube 40 to enter the cooking area 100.

In use, air from the cooking area 100 is monitored by the room thermostat 14, carbon dioxide sensor 18 and light scattering monitor 16. The amount of extraction required is determined by inverter 20 which in turn controls the dampers 22, 24 with Belimo® motors. In turn, extractor fan 28 is controlled by inverter 30 which monitors the pressure inside extraction tube 26 with pressure transducer 32. In this way, air is moved from the cooking area 100 to the outside 200 at the level required to maintain good air conditions in the cooking area 100.

In the meantime, fresh air is supplied from outside 200 to the cooking area 100 by canopy 42 and ceiling grille 44 by means of supply tube 40. The amount of air supplied by supply tube 40 is controlled by supply fan 34 whose supply level is controlled by inverter 36. Inverter 36 determines the correct level of air supply by monitoring the pressure in supply tube 40 and the pressure in extraction tube 26. In this way the extraction and supply of air from and to the cooking area 100 is kept in balance in order to maintain a preferred air pressure within the cooking vicinity.

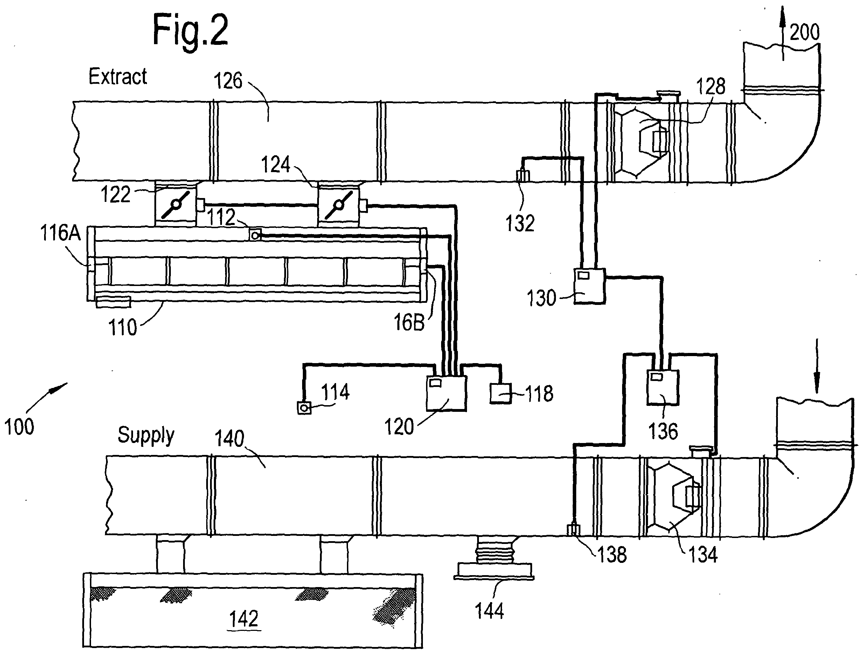

In Figure 2 a canopy 110 containing a plurality of eddy current filter units provides a filter chamber.

Thermostats 112 and 114 measure the ambient temperature of the air inside the extraction system and in the cooking area 100, respectively. The canopy 110 also comprises a light scattering monitor 116A, 116B. A carbon dioxide sensor 118 measures the concentration of carbon dioxide in the cooking area 100. The data from thermostats 112 and 114, light scattering monitor 116 and carbon dioxide monitor 118 are fed to an inverter 120 which acts as a signal processing means. The inverter 120 further connects to two Belimo® motor and damper combinations 122, 124.

The inverter 120 uses the data it is provided with to control the intensity of extraction by adjusting the Belimo® motor and damper combinations 122, 124.

The Belimo® motor and damper combinations 122, 124 control the throughput of air from the cooking area 100 to the extraction tube 126. Air is moved through the extraction tube 126 to the outside 200 by an extraction fan 128. The extraction fan 128 is controlled by an inverter 130 which in turn receives data from the pressure transducer 132 within the extraction tube 126.

The air extraction of Figure 2 also comprises a corresponding air supply system. This supply system comprises a supply fan 134 controlled by inverter 136 which receives data from inverter 130 and pressure transducer 138 inside supply tube 140. A canopy 142 and a ceiling grille 144 enable air from inside the supply tube 140 to enter the cooking area 100.

In use, air from the cooking area 100 is monitored by the room thermostat 114, carbon dioxide sensor 118 and light scattering monitor 116. The amount of extraction required is determined by inverter 120 which in turn controls the dampers 122, 124 with Belimo® motors. In turn, extractor fan 128 is controlled by inverter 130 which monitors the pressure inside extraction tube 126 with pressure transducer 132. In this way, air is moved from the cooking area 100 to the outside 200 at the level required to maintain good air conditions in the cooking area 100.

In the meantime, fresh air is supplied from outside 200 to the cooking area 100 by canopy 142 and ceiling grille 144 by means of supply tube 140. The amount of air supplied by supply tube 140 is controlled by supply fan 134 whose supply level is controlled by inverter 136.

Inverter 136 determines the correct level of air supply by monitoring the pressure in supply tube 140 and the pressure in extraction tube 126. In this way the extraction and supply of air from and to the cooking area 100 is kept in balance in order to maintain a preferred air pressure within the cooking vicinity.

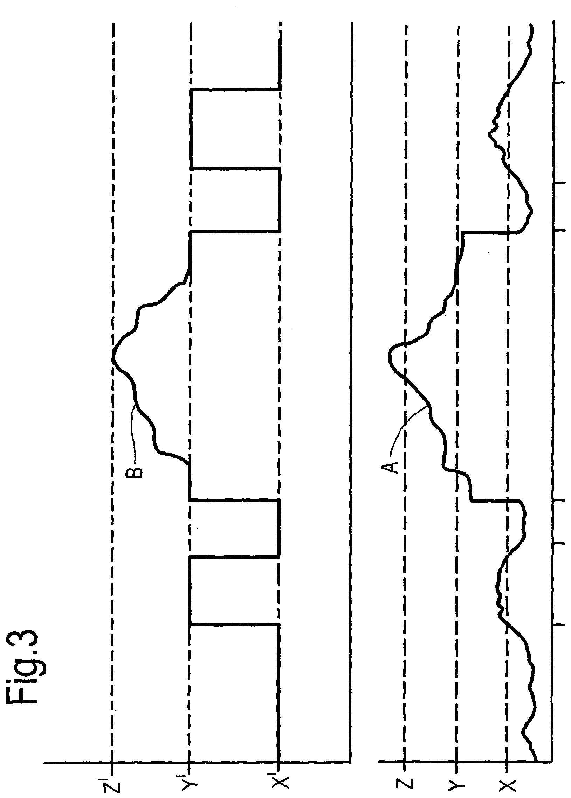

Figure 3 shows how at different levels of cooking activity A the level of air extraction B varies. When the level of cooking activity A is below a first threshold X the level of extraction is maintained at a first level X'. If the level of cooking activity reaches level Y then the level of air extraction is increased to Y'. If the level of activity goes above level Y then the level of air extraction varies between Y' and the maximum Z' which is defined by the physical limits of the equipment. If the level of cooking activity drops below Y, the air extraction level is maintained at Y' unless or until the level of cooking activity drops below X at which point the air extraction level drops to X'. The thresholds X and Y are preset and depend on the configuration of the specific combination of equipment in the installation. Thresholds X and Y may also be adjusted in situ by trained staff to suit local conditions.

Under circumstances when no cooking is taking place the system will usually operate at the first level X' of air extraction, in order to prevent the natural build-up of gases such as carbon dioxide. When cooking appliances are switched on but only relatively low cooking activity is taking place the system will usually operate at the second level of air extraction Y'. When substantive cooking activity is taking place the system will usually be in the mode where the level of air extraction varies continuously with cooking activity.

## Claims

1. A method of operating a system for extracting air from a cooking environment (100), the system comprising a filter chamber (10/110), a means for determining a level of cooking activity (A), the means for detecting the level of cooking activity being a heat detector (12, 14/112, 114) or a smoke detector (16A, 16B/116A, 116B) or a carbon dioxide concentration measuring means (18/180) or two or more of these in combination, wherein the system further comprises a signal processing means (20/200) and a pumping means (22, 24, 122, 124) , wherein the method comprises following steps:
the means for determining the level of cooking activity feeds information to the signal processing (20/200) means in order to control the pumping means(22, 24, 122, 124) wherein the pumping means (22, 24, 122, 124) , maintains :
a first level (X') of air extraction (B) when the level of cooking activity is below a first threshold (X),
a second level (Y') of air extraction (B) when the level of cooking activity is between the first threshold (X) and a second threshold (Y)
**characterized in that**
the air extraction (B) varies continuously with the level of cooking activity above the second threshold (Y).

2. A method according to Claim 1 wherein the means for determining the level of cooking activity may further comprise an air pressure sensor (38).

3. A method according to any of Claims 1 or 2 wherein there is more than one of each type of level of cooking activity determining means, located at different points.

4. A. method according to any of Claims 1 to 3 wherein the smoke detector comprises a light scattering monitor (16A, 16B/116A, 116B).

5. A method according to any of Claims 1 to 4 wherein the pumping means comprises a Belimo® motor and a damper (22, 24, 122, 124).

6. A method according to Claim 5 wherein the intensity of pumping is varied in order to vary the pressure between the damper and the pumping means (22, 24, 122, 124) .

7. A method according to Claims 5 or 6 wherein an air pressure measuring means (38) is placed between the damper and the pumping means (22, 24, 122, 124) in order to correctly control the intensity of the pumping.

8. A method according to any of Claims 1 to 7 further comprising a corresponding air supply mechanism (34).

9. A method according to Claim 8 wherein the air extraction system (26) and air supply mechanism (34) are linked in order to balance the air extracted and the air supplied so as to maintain a desired pressure within the vicinity.

10. A method according to Claim 8 or 9 wherein the air pressure within the kitchen is around 70 per cent of atmospheric pressure.

## Patentansprüche

1. Verfahren zum Betreiben eines Systems zum Absaugen von Luft aus einer Kochumgebung (100), wobei das System umfasst:
eine Filterkammer (10/110), ein Mittel zur Bestimmung einer Höhe der Kochaktivität (A),
wobei das Mittel zur Bestimmung der Höhe der Kochaktivität ein Hitzedetektor (12, 14/112, 114) oder ein Rauchdetektor (16A, 16B/116A, 116B) oder ein Kohlenstoffdioxidkonzentrations-Messmittel (18/180) ist oder zwei oder mehrere der genannten in Kombination sind,
wobei das System weiterhin aufweist: ein Signalverarbeitungsmittel (20/200) und ein Pumpmittel (22,24, 122, 124),
wobei das Verfahren die folgenden Schritte umfasst:
das Mittel zur Bestimmung der Höhe der Kochaktivität übergibt Informationen an das Signalverarbeitungsmittel (20/200), um das Pumpmittel (22, 24, 122, 124) zu kontrollieren,
wobei das Pumpmittel (22, 24, 122, 124) aufrechterhält:
ein erstes Niveau (X') des Luftabsaugens (B), wenn die Höhe der Kochaktivität niedriger als eine erste Schwelle (X) ist,
eine zweites Niveau (Y') des Luftabsaugens (B), wenn die Höhe der Kochaktivität zwischen der ersten Schwelle (X) und einer zweiten Schwelle (Y) ist,
**dadurch gekennzeichnet, dass**
das Absaugen der Luft (B) kontinuierlich mit der Höhe der Kochaktivität oberhalb der zweiten Schwelle (Y) variiert.

2. Verfahren gemäß Anspruch 1, wobei das Mittel zur Bestimmung der Höhe der Kochaktivität weiterhin einen Luftdrucksensor (38) umfassen kann.

3. Verfahren gemäß einem der Ansprüche 1 oder 2, wobei mehr als einer von jedem Typ der Mittel zur Bestimmung der Kochaktivität vorhanden ist, angeordnet an verschiedenen Punkten.

4. Verfahren gemäß einem der Ansprüche 1 bis 3, wobei der Rauchdetektor einen Lichtstreuungsmonitor (16A, 16B/116A, 116B) aufweist.

5. Verfahren gemäß einem der Ansprüche 1 bis 4, wobei das Pumpmittel einen Belimo^{®}-Motor und einen Dämpfer (22, 24, 122, 124) aufweist.

6. Verfahren gemäß Anspruch 5, wobei die Intensität des Pumpens variiert wird, um den Druck zwischen dem Dämpfer und dem Pumpmittel (22, 24, 122, 124) zu variieren.

7. Verfahren gemäß den Ansprüchen 5 oder 6, wobei ein Luftdruckmessmittel (38) zwischen dem Dämpfer und dem Pumpmittel (22, 24, 122, 124) angeordnet ist, um die Intensität des Pumpens korrekt zu kontrollieren.

8. Verfahren gemäß einem der Ansprüche 1 bis 7, weiterhin aufweisend einen korrespondierenden Luftzuführungsmechanismus (34).

9. Verfahren gemäß Anspruch 8, wobei das Luftabsaugsystem (26) und der Luftzuführungsmechanismus (34) verbunden sind, um die abgesaugte und die zugeführte Luft auszugleichen, sodass ein gewünschter Druck in der Umgebung aufrechterhalten wird.

10. Verfahren gemäß Anspruch 8 oder 9, wobei der Luftdruck in der Küche ungefähr 70 % des atmosphärischen Drucks beträgt.

## Revendications

1. Méthode d'opération d'un système pour extraire l'air d'un environnement de cuisine (100), le système comprenant une chambre de filtration (10/100), un moyen pour déterminer un niveau d'activité de cuisine (A), le moyen pour détecter l'activité de cuisine étant un détecteur de chaleur (12, 14/112, 114) ou un détecteur de fumée (16A, 16B/116A, 116B) ou un moyen de mesure de la concentration de dioxyde de carbone (18/180) ou deux ou plus de ceux-ci en combinaison, dans laquelle le système comprend en outre un moyen de traitement du signal (20/200) et un moyen de pompage (22, 24, 122, 124), dans lequel la méthode comprend les étapes suivantes :
le moyen pour déterminer le niveau d'activité de cuisine transmet l'information au moyen de traitement du signal (20/200) afin de contrôler le moyen de pompage (22, 24, 122, 124), dans lequel le moyen de pompage (22, 24, 122, 124), maintient :
un premier niveau (X') d'extraction d'air (B) quand le niveau d'activité de cuisine est en dessous d'un premier seuil (X),
un second niveau (Y') d'extraction d'air (B) quand le niveau d'activité de cuisine est entre le premier seuil (X) et un second seuil (Y)
**caractérisé en ce que** l'extraction d'air (B) varie continuellement avec le niveau d'activité de cuisine au dessus du second seuil (Y).

2. Méthode selon la revendication 1 dans laquelle le moyen pour déterminer le niveau d'activité de cuisine peut comprendre en outre un capteur de pression d'air (38).

3. Méthode selon l'une quelconque des revendications 1 ou 2 dans laquelle il y a plus d'un de chaque type de moyen de détermination du niveau d'activité de cuisine, localisés à différents points.

4. Méthode selon l'une quelconque des revendications 1 à 3 dans laquelle le détecteur de fumée comprend un moniteur de diffusion de lumière (16A, 16B/116A, 116B).

5. Une méthode selon l'une quelconque des revendications 1 à 4 dans laquelle le moyen de pompage comprend un moteur Belimo® et un clapet (22, 24, 122, 124).

6. Méthode selon la revendication 5 dans laquelle on fait varier l'intensité de pompage afin de varier la pression entre le clapet et le moyen de pompage (22, 24, 122, 124).

7. Méthode selon les revendications 5 ou 6 dans laquelle un moyen de mesure de la pression d'air (38) est placé entre le clapet et le moyen de pompage (22, 24, 122, 124) afin de contrôler correctement l'intensité du pompage.

8. Méthode selon l'une quelconque des revendications 1 à 7 comprenant en outre un mécanisme d'alimentation d'air correspondant (34).

9. Méthode selon la revendication 8 dans laquelle le système d'extraction de l'air (26) et le mécanisme d'alimentation d'air (34) sont liés afin d'équilibrer l'air extrait et l'air fourni pour maintenir une pression désirée dans l'environnement proche.

10. Méthode selon les revendications 8 ou 9 dans laquelle la pression d'air à l'intérieur de la cuisine est à environ 70 pour cent de la pression atmosphérique.
